# EUROPEAN PATENT APPLICATION

(11) **EP 1 168 783 A2**
(43) Date of publication of application: **02.01.2002**
(21) Application number: 01000219.4
(22) Date of filing: 19.06.2001
(51) Int. Cl.: H04M 1/60, H04M 1/19

(54) **Portable device and method of providing user with information on operation of portable device**

(30) Priority: 26.06.2000 FI 20001515
(71) Applicant: NOKIA MOBILE PHONES LTD., 02150 Espoo (FI)
(72) Inventor: Matero, Juha, 90570 Oulu (FI); Ronkainen, Sami, 90570 Oulu (FI)
(74) Representative: Pykälä, Timo Tapani

(57) **Abstract**

The invention relates to a portable device, such as a mobile station. Furthermore, the invention relates to a method of providing a user with information on the operation of the portable device. In the device, such a tone is produced that, due to a tone feature, can be distinguished from background noise. This feature can be tone frequency, duration, volume or moment of time. The device can analyse background noise automatically, and based on this, it adjusts at least one feature of the tone automatically such that the tone can be distinguished from background noise, and the background noise does not mask out the tone. Alternatively, the user himself can adjust the tone frequency or duration in a desired way so that it would be distinguished from background noise more clearly. The method comprises the steps of: (202) detecting an event that interests the user and concerns the operation of the device; (204) determining the volume of background noise in the usage environment of the device; (206) automatically adjusting at least one tone feature that can be sensed by hearing such that the tone is distinguished from background noise by a human hearing sense; (208) giving feedback on the operation of the device by using a tone. Alternatively, the method comprises the steps of (302) receiving a control affecting the tone frequency and/or duration and controlling the tone production from a user interface of the device; (306) adjusting the tone frequency and/or duration according to the control.

## Description

### FIELD OF THE INVENTION

The invention relates to a portable device. A portable device refers to mobile station, for example, or to some other subscriber terminal of a telecommunication system. Furthermore, the invention relates to a method of providing a user with information on the operation of the portable device.

### BACKGROUND OF THE INVENTION

A portable device provides a user with information on its operation by using a tone. A tone refers herein to various tone signals. The structure of a tone can be relatively complicated: it can, for example, be a short tune, which consists of notes and is used in a mobile station to indicate an incoming call.

In psychoacoustics, a phenomenon called masking effect is known, which means that if two sounds are close enough to each other both in time and in regard to frequency, the louder sound masks out the quieter one. In a typical usage environment of a portable device there is nowadays quite much different background noise, which is caused for example by various devices and machines, such as different vehicles, and by activities of people. Background noise can thus mask out the tone of a device, and the user of the device does not hear an event relating to the operation of the device, such as an incoming call.

A prior art solution to this problem is a manual volume control in a portable device. The problem is, however, that volume must always be adjusted manually suitable according to background noise of each usage environment. In addition, when background noise is loud enough, the volume control does not necessarily help. Another solution is to give information in a manner that can be perceived by other senses, such as senses of touch or sight. The problem in these solutions is that they require that the device is either held against the skin or in such a place where it can be seen. Furthermore, additional devices, such as a vibrating alarm or a signal light, cause additional manufacturing costs for the device.

### BRIEF DESCRIPTION OF THE INVENTION

The object of the invention is to provide an improved portable device and an improved method of providing a user with information on the operation of the portable device. Portable devices according to claims 1 and 17 are set forth as aspects of the invention. Furthermore, methods of providing a user with information on the operation of the portable device, as claimed in claims 20 and 34, are set forth as aspects of the invention. The preferred embodiments of the invention are disclosed in the dependent claims.

The invention is based on producing a tone which, due to a tone feature, can be distinguished from background noise. This feature can be tone frequency, duration, volume or time. The device can analyse background noise automatically, and based on this, it adjusts at least one feature of the tone automatically such that the tone can be distinguished from background noise and the background noise does not mask out the tone. Alternatively, the user himself can adjust the tone frequency or duration in a desired way so that it would be distinguished from background noise more clearly.

### LIST OF FIGURES

The preferred embodiments of the invention are described here by way of example with reference to the attached drawings, wherein
Figure 1 is a simplified block diagram illustrating an example of the structure of a portable device;
Figures 2 and 3 are flow charts illustrating methods of providing a user with information on the operation of the portable device.

### DESCRIPTION OF THE EMBODIMENTS

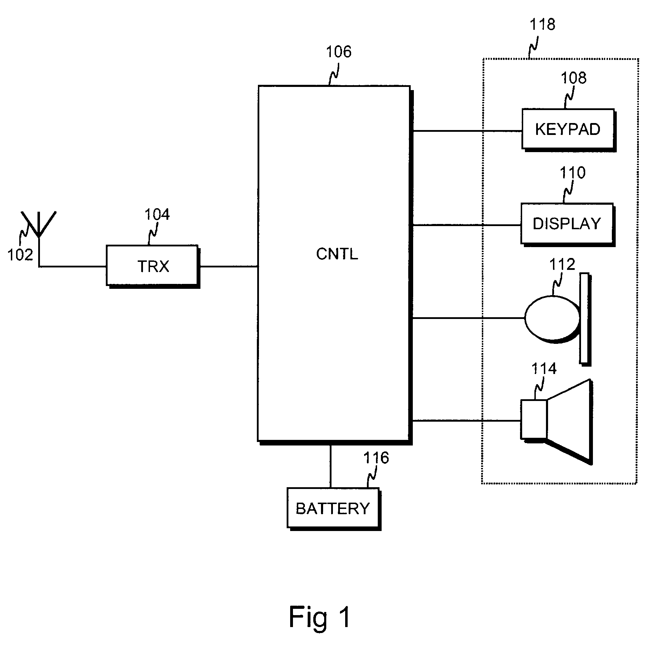

With reference to Figure 1, an example of the structure of a typical portable device will be described in the following. It concerns a mobile telephone but it is obvious that the invention is not restricted thereto, but also other portable devices, such as various terminals of telecommunication systems, are portable devices in accordance with the invention. One sub-group of these terminals include terminals in mobile systems based on a wireless radio connection, i. e. mobile stations.

A mobile station comprises control means 106 for monitoring and controlling the operation of the device and for implementing various functions defined for the device. Typically, the control means 106 are implemented with a microprocessor with software, whereby the monitoring, control and various functions are implemented as program modules. Also different equipment implementations are possible, for example, an application-specific integrated circuit ASIC. In Figure 1, the control means 106 control and monitor all parts that are connected with a line to the block representing the control means 106.

The mobile station comprises an antenna 102 for receiving a signal from the radio path and for sending a signal onto a radio path. The generation of the transmitted radio signal and the handling of the received radio signal are performed in a transceiver 104.

An accumulator 116 supplies power to the mobile station. Instead of the accumulator, batteries can also be used. For instance, in a house, external mains power, or in a vehicle, power from the car battery can be used.

The mobile station also includes a user interface 118. A user interface 118 refers to means by which the user gets information on and controls the operation of the device. In the mobile station, a typical user interface 118 comprises a microphone 112, a loudspeaker 114, a keypad 108 and a display 110. The display 110 can be implemented with liquid crystals, for instance. The mobile station being a videophone, a video camera is also included in the user interface of the mobile station. By means of the keypad 108 the mobile station is controlled to execute a desired operation. The microphone 112 is used for forming speech to be transmitted. The loudspeaker 114 converts the transmitted sound into an audible form. The loudspeaker 114 can also be used for giving an audible alarm, for instance by ringing a tone signal for informing a called party of an incoming call. The tone can not only be produced by the loudspeaker 114, but also by any tone means known to those skilled in the art that produce sound electroacoustically, for instance by a piezoelectric circuit, in which vibration generated piezoelectrically to the crystals converts into sound. Also a user interface which is implemented partly or entirely with speech control can be included in the portable device.

Abstract information given to the user as feedback can symbolize an event of the device, for example, an error situation. One of such error messages is a notification of a battery running down. Another example of error messages is a notification that the portable device has no radio connection to a base station. The feedback also comprises feedback for the user, whether the PIN (Personal Identification Number) code enquiry has succeeded. The feedback comprises an incoming-call alarm. Different callers and/or caller groups can be indicated by different alarm tones. The above-described examples of the abstract information to be conveyed as tone to the user on the operation of the portable device are only a minor part of all potential information that could be conveyed to the user by means of the invention.

The control means 106 are thus arranged to give the user feedback on the operation of the device by using tone that is produced by the tone means 114. The portable device further comprises determining means 106, 112 for determining the volume of background noise of the environment where the device is used. On the basis of background noise volume, the control means 106 are arranged to automatically adjust at least one tone feature that can be sensed by hearing, such that the tone can be distinguished from background noise by human hearing sense.

The determining means 106, 112 comprise conversion means 112 for performing an acousto-electric conversion for background noise and the control means 106, which are arranged to determine the volume of background noise by analysing an electric signal representing background noise. At their simplest, the conversion means 112 are implemented as a microphone of the device. The electric signal from the microphone 112 is then analysed by software implemented in the microprocessor 106, which software can in the most complicated case be a frequency analyzer, by which the volume of background noise in different frequency ranges can be analysed.

In a preferred embodiment, the tone feature to be adjusted is tone frequency. The tone frequency is adjusted such that masking effect can be diminished.

In a preferred embodiment, the control means 106 are arranged to produce a tone particularly at such frequencies where the volume of background noise is low. For instance, if background noise is loud in a low-frequency range, the tone signal of the device is implemented in a high-frequency range, and the masking effect caused by background noise does not mask out the tone signal of the device.

In a preferred embodiment, the tone feature to be adjusted is tone volume. The tone volume is adjusted such that the masking effect can be diminished.

In a preferred embodiment, the control means 106 are arranged to produce a tone that is louder than background noise.

In a preferred embodiment, the tone feature to be adjusted is the moment of time at which the tone is produced. This moment of time is adjusted so that the masking effect can be diminished.

In a preferred embodiment, the determining means 106, 112 are arranged to determine the moment at which a sudden background noise of short duration occurs, and the control means 106 are arranged to produce a tone nonsimultaneously with the moment at which background noise occurs, i.e. at least partly before or after that moment. If background noise is, for example, a hammerblow, the device delays the tone production for example by 200 milliseconds and the tone does not fade under background noise. If background noise is to some extent regular, for example regularly occurring hammerblows, this can be analysed and the tone can be produced at such moments when there is no noise.

In a preferred embodiment, the tone feature to be adjusted is tone duration. The tone duration refers herein to the length of a tone signal, an individual note or of an entire tune. The tone duration is adjusted such that the masking effect can be diminished.

In a preferred embodiment, the control means 106 are arranged to form a tone from notes and to make the individual notes sound longer when background noise is getting louder. According to the tests carried out by the applicant, tunes that are composed of individual notes that are made to sound longer are perceived more easily in noisy surroundings than notes of normal length.

In a preferred embodiment, the control means 106 are arranged to receive a control relating to at least one of the tone features that can be sensed by hearing and controlling the tone production carried out by the user interface 118 of the portable device. This means that although the device adjusts some tone feature(s) automatically, it is the user who sets such limits to the adjustment that cannot be exceeded.

In a preferred embodiment, tone frequency ranges that can be selected automatically by the control means 106 are selected by the control. For example, older people do not usually hear higher frequency ranges of tones, in which case the control can prevent the device from trying to diminish the masking effect caused by low-frequency background noise by transposing the tone to a high frequency, which the user cannot hear any way. A person may also have a hearing defect, which is present in a certain frequency range. In such a case, he should be able to set that kind of settings to the device that the tones are not automatically transposed to that particular frequency range. The frequency ranges can be selected relatively roughly, for example high/middle/low, or, if desired, by a more exact grouping, for example at intervals of 1000 to 5000 herz.

In a preferred embodiment, tone durations that can be selected automatically by the control means 106 are selected by the control. With this choice the user can change the permanent settings according to his wishes and adjust the rhythm of the ringing tone in a way.

So far, a portable device has been described, which comprises determining means for determining the volume of background noise, and, on the basis of the background noise volume, adjusting some tone feature to diminish the masking effect. In the following, a device is described, which does not comprise determining means but which can, however, also diminish the masking effect. The determining means are in a way replaced by the measures taken by the user himself. Such a portable device comprises control means 106 for controlling the operation of the device, a user interface 118 in connection with the control means 106, and tone means 114 that are controlled by the control means 106 and that produce sound electroacoustically. The control means 106 are arranged to give feedback on the operation of the device by using the tone produced by the tone means 114. Unlike the above described device, the control means 106 are arranged to receive a control affecting the tone frequency and/or duration and controlling the tone production carried out by the user interface 118, and to adjust the tone frequency and/or duration according to the control. Thus, if the user detects that he does not hear the tone of his device, for instance due to low-frequency background noise, he adjusts his device via the user interface 118 to use high-frequency tones. Correspondingly, the user can adjust the notes to sound longer in noisy surroundings.

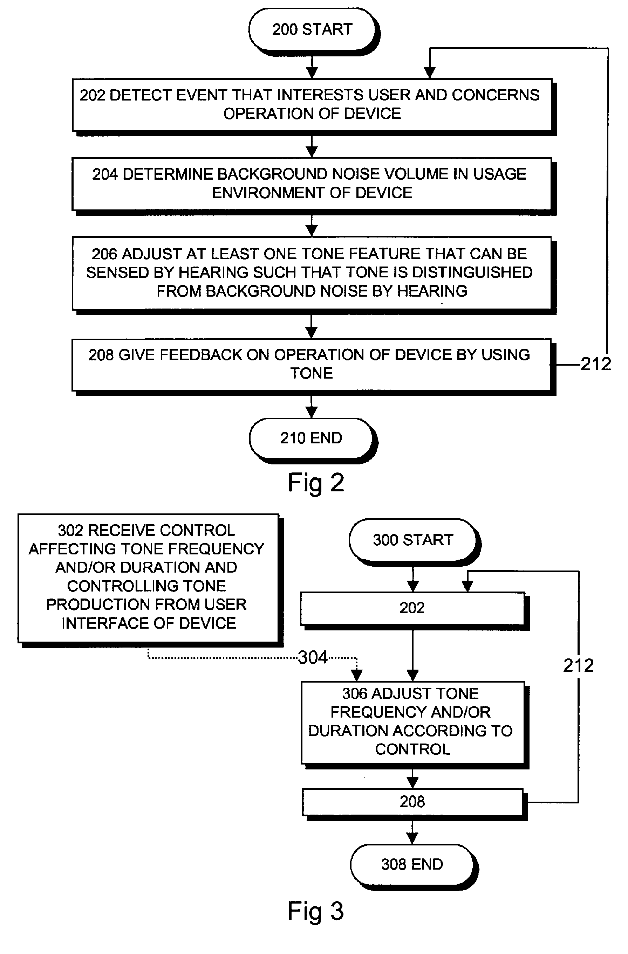

Figure 2 illustrates a method of providing a user with information on the operation of the portable device. The performance of the method starts from block 200, i.e. in practice at the moment the user of the device switches on the device. In block 202, an event that interests the user and concerns the operation of the device is detected.

In block 204, the volume of background noise in the usage environment of the device is determined.

In block 206, at least one tone feature that can be sensed by hearing is automatically adjusted such that the tone is distinguishable from background noise by a human hearing sense.

Next, in block 208, feedback is given on the operation of the device by using a tone, a feature of which tone is automatically adjusted to diminish the masking effect of background noise. Arrow 212 illustrates the repeatability of the method: a transfer from block 208 back to block 202 is performed and the next event is awaited. The performance of the method comes to an end in block 210, i.e. in practice at the moment the user of the device switches off the device.

Various embodiments of the method are described in the dependent method claims, the substantial contents of which are already described in the above in connection with the description of the portable device. Therefore the description will not be repeated herein. The method can be advantageously modified by means of the described characteristics.

Figure 3 illustrates another method of providing a user with information on the operation of the portable device. The performance of the method starts from block 300. In block 202, an event that interests the user and concerns the operation of the device is detected. Block 302 is depicted as it were isolated from the sequence of functions, since the user can perform the function according to block 302 at any time. In block 302, a control affecting the tone frequency and/or duration and controlling the tone production is received from the user interface 118 of the device. Arrow 304 from block 302 to block 306, illustrated by broken lines, illustrates that the choices made in block 302 affect the operation of block 306. In block 306, the tone frequency and/or duration is adjusted according to the control performed in block 302. Then in block 208, feedback is given on the operation of the device by using a tone, the frequency and/or duration of which is automatically adjusted to diminish the masking effect of background noise. Like in Figure 2, arrow 212 illustrates the repeatability of the method. The performance of the method comes to an end in block 308. In a way, the method of Figure 3 corresponds to the functionality of the above portable device without the determining means. In principle, the methods of Figures 2 and 3, and the corresponding two different portable devices, could also be combined such that the user could select whether he himself controls the tone frequency and/or duration manually or whether the device controls some tone feature automatically on the basis of the analysis carried out by the determining means.

Even though the invention is described above with reference to the example of the attached drawings, it is obvious that the invention is not restricted thereto but it can be modified in a variety of ways within the inventive idea disclosed in the accompanying claims.

## Claims

1. A portable device comprising
control means (106) for controlling the operation of the device, and
tone means (114) that are controlled by the control means (106) and that produce sound electroacoustically,
which control means (106) are arranged to give feedback on the operation of the device by using a tone produced by the tone means (114),
**characterized in that**
the portable device further comprises determining means (106, 112) for determining the volume of background noise of the usage environment of the device, on the basis of which background noise volume the control means (106) are arranged to automatically adjust at least one tone feature that can be sensed by hearing, such that the tone is distinguished from background noise by a human hearing sense.

2. A portable device as claimed in claim **1, characterized in that** the tone feature is tone frequency.

3. A portable device as claimed in claim 2, **characterized in that** the determining means (106, 112) are arranged to determine the volume of background noise at different frequencies, and the control means (106) are arranged to produce a tone particularly at such frequencies where the volume of background noise is low.

4. A portable device as claimed in any one of the preceding claims, **characterized in that** the tone feature is tone volume.

5. A portable device as claimed in claim 4, **characterized in that** the control means (106) are arranged to produce a tone that is louder than background noise.

6. A portable device as claimed in any one of the preceding claims, **characterized in that** the tone feature is the moment of time at which the tone is produced.

7. A portable device as claimed in claim 6, **characterized in that** the determining means (106, 112) are arranged to determine the moment at which a sudden background noise of short duration occurs, and the control means (106) are arranged to produce a tone nonsimultaneously with the moment at which background noise occurs.

8. A portable device as claimed in any one of the preceding claims, **characterized in that** the tone feature is tone duration.

9. A portable device as claimed in claim 8, **characterized in that** the control means (106) are arranged to form a tone from notes and to make the individual notes sound longer when background noise is getting louder.

10. A portable device as claimed in any one of the preceding claims, **characterized in that** the determining means (106, 112) comprise conversion means (112) for performing an acousto-electric conversion for background noise and the control means (106), which control means (106) are arranged to determine the volume of background noise by analysing an electric signal representing background noise.

11. A portable device as claimed in claim 10, **characterized in that** the conversion means (114) are a microphone.

12. A portable device as claimed in any one of the preceding claims, **characterized in that** the tone means (114) are a loudspeaker or a piezoelectrically functioning circuit.

13. A portable device as claimed in any one of the preceding claims, **characterized in that** the control means (106) are arranged to receive a control relating to at least one of the tone features that can be sensed by a human hearing sense and controlling the tone production carried out by the user interface (118) of the portable device.

14. A portable device as claimed in claim 13, **characterized in that** those tone frequency ranges that are automatically selectable for the control means (106) are selected by the control.

15. A portable device as claimed in claim 13 or 14, **characterized in that** those tone durations that are automatically selectable for the control means (106) are selected by the control.

16. A portable device as claimed in any one of the preceding claims, **characterized in that** the portable device is a subscriber terminal of a telecommunication system.

17. A portable device comprising
control means (106) for controlling the operation of the device,
a user interface (118) in connection with the control means (106),
and tone means (114) that are controlled by the control means (106) and that produce sound electroacoustically,
which control means (106) are arranged to give feedback on the operation of the device by using a tone produced by the tone means (114),
**characterized in that**
the control means (106) are arranged to receive a control affecting the tone frequency and/or duration and controlling the tone production carried out by the user interface (118), and to adjust the tone frequency and/or duration according to the control.

18. A portable device as claimed in claim 17, **characterized in that** the tone means (114) are a loudspeaker or a piezoelectrically functioning circuit.

19. A portable device as claimed in claim 17 or 18, **characterized in that** the portable device is a subscriber terminal of a telecommunication system.

20. A method of providing a user with information on the operation of a portable device, the method comprising the steps of:
(202) detecting an event that interests the user and concerns the operation of the device;
(208) giving feedback on the operation of the device by using a tone;
**characterized by**
(204) determining the volume of background noise in the usage environment of the device;
(206) automatically adjusting at least one tone feature that can be sensed by hearing such that the tone is distinguished from background noise by a human hearing sense.

21. A method as claimed in claim 20, **characterized by** the tone feature being tone frequency.

22. A method as claimed in claim 21, **characterized by** determining the volume of background noise at different frequencies and producing a tone particularly at such frequencies where the volume of background noise is low.

23. A method as claimed in any one of claims 20 to 22, **characterized by** the tone feature being tone volume.

24. A method as claimed in claim 23, **characterized by** producing a tone that is louder than background noise.

25. A method as claimed in any one of claims 20 to 24, **characterized by** the tone feature being the moment of time at which the tone is produced.

26. A method as claimed in claim 25, **characterized by** determining the moment at which a sudden background noise of short duration occurs, and producing a tone nonsimultaneously with the moment at which background noise occurs.

27. A method as claimed in any one of claims 20 to 26, **characterized by** the tone feature being tone duration.

28. A method as claimed in claim 27, **characterized by** forming a tone from notes and making the individual notes sound longer when background noise is getting louder.

29. A method as claimed in any one of claims 20 to 28, **characterized by** performing an acousto-electric conversion for background noise and determining the volume of background noise by analysing an electric signal representing background noise.

30. A method as claimed in any one of claims 20 to 29, **characterized by** receiving a control relating to at least one of the tone features that can be sensed by hearing and controlling the tone production carried out by the user interface of the portable device.

31. A method as claimed in claim 30, **characterized by** selecting those tone frequency ranges by means of the control to which the tone can be adjusted automatically.

32. A method as claimed in claim 30 or 31, **characterized by** selecting those tone durations by the control that can be adjusted automatically for the tone.

33. A method as claimed in any one of claims 20 to 32, **characterized by** the portable device being a subscriber terminal of a telecommunication system.

34. A method of providing a user with information on the operation of a portable device, the method comprising the steps of:
(202) detecting an event that interests the user and concerns the operation of the device;
(208) giving feedback on the operation of the device by using a tone;
**characterized by**
(302) receiving a control affecting the tone frequency and/or duration and controlling the tone production from a user interface of the device;
(306) adjusting the tone frequency and/or duration according to the control.

35. A method as claimed in claim 34, **characterized by** the portable device being a subscriber terminal of a telecommunication system.
